# EUROPÄISCHE PATENTSCHRIFT

(11) **EP 3 292 952 B1**
(45) Veröffentlichungstag und Bekanntmachung des Hinweises auf die Patenterteilung: **12.05.2021**
(21) Anmeldenummer: 17189769.7
(22) Anmeldetag: 07.09.2017
(51) Int. Cl.: B23Q 17/22, B23P 19/06, B23Q 11/10

(54) **BEARBEITUNGSMASCHINE MIT VERBESSERTEM LÄNGENMESSSYSTEM**
PROCESSING MACHINE WITH IMPROVED LENGTH MEASURING SYSTEM
MACHINE DE TRAITEMENT DOTÉE D'UN SYSTÈME DE MESURE DE LONGUEUR AMÉLIORÉ

(30) Priorität: 09.09.2016 AT 508042016
(43) Veröffentlichungstag der Anmeldung: 14.03.2018
(73) Patentinhaber: Fill Gesellschaft m.b.H., 4942 Gurten (AT)
(72) Erfinder: SEHRSCHÖN, Harald, 4924 Waldzell (AT); FISCHER, Hannes, 4942 Gurten (AT)
(74) Vertreter: Burger, Hannes

(56) Entgegenhaltungen:
- EP-A2- 2 799 169
- DE-A1- 3 816 737

## Beschreibung

Die Erfindung betrifft eine Bearbeitungsmaschine nach dem Oberbegriff des Anspruchs 1 und ein Verfahren nach dem Oberbegriff des Anspruchs 6 (siehe z.B. DE 38 16 737 A1).

Eine Bearbeitungsmaschine der genannten Art ist aus dem Stand der Technik grundsätzlich bekannt und wird insbesondere für die spanende Bearbeitung von Werkstücken eingesetzt. Die Spindel kann dabei in an sich bekannter Weise computergesteuert bewegt werden. Durch die Hohlbohrung in der Spindel kann Kühlmittel durch ebenfalls hohlgebohrte Werkzeuge zu einer Bearbeitungsstelle gepresst werden.

Üblicherweise wird die Position eines Werkzeugs direkt durch eine Position der Spindel vorgegeben, das heißt eine Bewegung der Spindel wird 1:1 auf das Werkzeug übertragen. Durch den bei Bearbeitungsmaschinen gewöhnlich starren Aufbau können auf diese Weise Werkstücke mit engen Toleranzen hergestellt werden.

In manchen Fällen ist diese starre Zuordnung jedoch nachteilig, beispielsweise beim Ein- und Ausdrehen von Schrauben beziehungsweise Gewindeeinsätzen. Diese Fertigungsschritte lassen sich mit einer herkömmlichen Bearbeitungsmaschine nicht oder nur eingeschränkt ausführen, da nicht vorhergesagt werden kann, wann die Gewindegänge einer Gewindebohrung und die Gewindegänge einer Schraube / eines Gewindeeinsatzes ineinander greifen und der Einschraubvorgang tatsächlich beginnt. Ein Nachführen der Spindel ist daher schwierig. Ein falsches Nachführen der Spindel kann zudem leicht zu Beschädigung des Werkstücks und/oder der Maschine führen, insbesondere wenn die Bearbeitungsmaschine wegen der Möglichkeit zur spanenden Bearbeitung zur Ausübung hoher Kräfte ausgelegt ist.

Eine Aufgabe der vorliegenden Erfindung ist es daher, eine verbesserte Bearbeitungsmaschine sowie ein verbessertes Verfahren zu deren Betrieb anzugeben. Insbesondere soll die Bearbeitungsmaschine das spanende Bearbeiten eines Werkstücks, jedoch auch das sichere Eindrehen von Schrauben und Gewindeeinsätzen ermöglichen.

Die Aufgabe der Erfindung wird mit einer Bearbeitungsmaschine nach Anspruch 1 gelöst.

Weiterhin wird die Aufgabe der Erfindung mit einem Betriebsverfahren nach Anspruch 6 gelöst.

Auf diese Weise wird ein "weiches" Meßsystem für die Bearbeitungsmaschine bereitgestellt, das insbesondere Abstandsmessungen zu Flächen in unbekanntem Abstand zur Spindel ermöglicht. Insbesondere kann die Stange mit einer geringen, definierten Messkraft auf eine zu vermessende Fläche aufgesetzt werden. Dies ist mit dem Antrieb einer herkömmlichen, kraftvollen Bearbeitungsmaschine nicht möglich. Nicht vorhersehbare Kollisionen mit dem Werkstück würden zwangsläufig zu Beschädigungen führen. Das Einsatzspektrum einer Bearbeitungsmaschine wird durch das neuartige Meßsystem daher merklich erweitert. Wegen der Kopplung mit einem Längenmeßsystem kann die Stange auch als "Meßstange" bezeichnet werden.

Ergänzend wird angemerkt, dass der Begriff "Bohrung" im Rahmen der Erfindung nicht notwendigerweise impliziert, dass die betreffende Ausnehmung mit einem Bohrer hergestellt ist. Stattdessen kann die Bohrung auch mit anderen Herstellungsverfahren realisiert sein, und es kann auch ein rohrförmiges Ausgangsmaterial für die Herstellung des betreffenden Bauteils, insbesondere für die Spindel, herangezogen werden.

Vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn die Stange durch einen Linearantrieb bewegbar ist oder Teil eines Linearantriebs ist. Auf diese Weise kann die Stange motorisch, beziehungsweise von einer Maschinensteuerung veranlasst, bewegt werden.

Besonders vorteilhaft ist es, wenn die Stange als Kolbenstange eines Pneumatikzylinders ausgebildet ist und mit Hilfe von Druckluft bewegbar ist. Durch Druckbeaufschlagung des Pneumatikzylinders kann auf vergleichsweise einfache Weise eine definierte Messkraft aufgebracht werden. Die Messergebnisse sind daher sehr gut reproduzierbar. Zudem kann die Stange vergleichsweise schnell ein- und ausgefahren werden, was niedrige Bearbeitungszeiten mit der Bearbeitungsmaschine begünstigt. Obwohl der Einsatz eines Pneumatikzylinders vorteilhaft ist, sind auch andere Linearantriebe vorstellbar. Beispielsweise kann die Stange als Kolbenstange eines Hydraulikantriebs, als (federbelastete) Spitze eines elektrischen Spindelantriebs oder auch als Anker eines Elektromagneten ausgebildet sein.

Günstig ist es auch, wenn die Bearbeitungsmaschine einen an die Spindel angekoppelten Kühlmittelflansch aufweist, mit dessen Hilfe Kühlmittel in die Hohlbohrung der Spindel eingebracht werden kann. Einige Werkzeuge weisen Hohlbohrungen auf. In die Hohlbohrung der Spindel eingebrachtes Kühlmittel kann auf diese Weise direkt zur Bearbeitungsstelle vordringen.

Besonders vorteilhaft ist es auch, wenn die Spindel eine mit der Hohlbohrung verbundene und im Bereich des Kühlmittelflansches angeordnete Kühlmittelbohrung aufweist und die Stange hinter diese Kühlmittelbohrung bewegbar ist. Dementsprechend ist es auch von besonderem Vorteil, wenn ein spanabhebendes Werkzeug in der Werkzeugaufnahme gespannt wird und die Stange hinter die mit der Hohlbohrung der Spindel verbundene und in der Spindel angeordnete Kühlmittelbohrung bewegt wird und Kühlmittel in die Hohlbohrung der Spindel eingebracht wird. Auf diese Weise erbringt die Hohlbohrung der Spindel einen Doppelnutzen. Einerseits fungiert sie als Leitung für ein Kühlmittel, andererseits dient sie als Führung für die Meßstange. Die Meßstange dichtet die Hohlbohrung der Spindel in der vorgestellten Betriebsweise nach hinten ab. Zu diesem Zweck kann zwischen Hohlbohrung und Meßstange auch ein Dichtring vorgesehen sein.

Vorteilhaft ist es darüber hinaus, wenn die Stange über die Werkzeugaufnahme der Bearbeitungsmaschine hinaus bewegbar ist beziehungsweise über die Werkzeugaufnahme hinaus bewegt wird, wenn die Werkzeugaufhahme leer ist. Auf diese Weise kann auf die Oberfläche eines Werkstücks angetastet und somit der Abstand zwischen Spindel und Werkstück ermittelt werden. Ein gesonderter Messtaster, der zu diesem Zweck für gewöhnlich in die Werkzeugaufnahme gespannt wird, kann daher entfallen. Wegen des entfallenden Umspannvorganges kann auch die Bearbeitung eines Werkstücks deutlich rascher erfolgen.

Die Bearbeitungsmaschine umfasst ein in der Werkzeugaufnahme angeordnetes Einschraubwerkzeug, umfassend ein Basisteil, welches in der Werkzeugaufnahme gespannt ist, und eine im Basisteil längsverschiebliche, jedoch mit dieser drehgekoppelten Aufnahme für eine Schraube und/oder einen Gewindeeinsatz. Auf diese Weise kann die Bearbeitungsmaschine nicht nur für die spanende Bearbeitung eingesetzt werden, sondern auch für die Montage von Bauteilen und insbesondere für das Eindrehen von Gewindeeinsätzen, die in Werkstücke aus Aluminium eingesetzt werden, um das Gewinde fester und haltbarer zu machen. Diese Gewindeeinsätze sind auch unter dem Handelsnahmen "Helicoil" bekannt.

Die Stange ist bis zu der genannten Aufnahme für die Schraube und/oder den Gewindeeinsatz bewegbar, bzw. wird bis zu der Aufnahme für die Schraube und/oder den Gewindeeinsatz bewegt, wenn das Einschraubwerkzeug in der Werkzeugaufnahme gespannt ist. Dadurch kann auf sichere Weise gemessen werden, ob und wie weit eine Schraube beziehungsweise ein Gewindeeinsatz in eine Gewindebohrung des Werkstücks eingedreht wurde. Bei einem Einschraubvorgang kann ja nicht mit Sicherheit vorhergesagt werden, wann die Gewindegänge der Schraube / des Gewindeeinsatzes in die Gewindegänge der Gewindebohrung eingreifen und der Einschraubvorgang beginnt. Ein kontrolliertes Nachführen der starr angetriebenen Spindel ist daher schwierig beziehungsweise mit dem Risiko einer Beschädigung von Werkstück und/oder Maschine verbunden. Letzteres kann passieren, wenn die Spindel in Richtung der Gewindebohrung bewegt wird, obwohl der Einschraubvorgang noch nicht begonnen hat. Mit dem vorgestellten System kann der Einschraubvorgang aber sicher überwacht werden. Das Einschrauben als solches kann wegen der Ausgleichsmöglichkeit im Einschraubwerkzeug mit oder ohne Nachführung der Spindel erfolgen.

Vorteilhaft ist es in obigem Zusammenhang schließlich, wenn mit der Stange Kraft/Druck auf die Aufnahme für die Schraube und/oder den Gewindeeinsatz ausgeübt wird, insbesondere jene Kraft / jener Druck welche/welcher für das Einschrauben der Schrauben und/oder Gewindeeinsätze in ein Werkstück erforderlich ist. Dadurch wird vermieden, dass die Schraube / der Gewindeeinsatz nur lose über die Gewindebohrung hinweg gedreht wird und es nie zu einem Einschrauben kommt. Vorteilhaft wird zu diesem Zweck durch die Stange eine Kraft von größer oder gleich 5N aufgebracht. Bei Verwendung eines Pneumatikzylinders oder Hydraulikzylinders kann eine gewünschte Kraft einfach durch Einstellung eines entsprechenden Druckes aufgebracht werden. Die Stange kann in diesem Zusammenhang auch als "Druckstange" oder "kombinierte Mess-/Drückstange" bezeichnet werden.

Zum besseren Verständnis der Erfindung wird diese anhand der nachfolgenden Figur näher erläutert.

Es zeigen in stark vereinfachter, schematischer Darstellung:

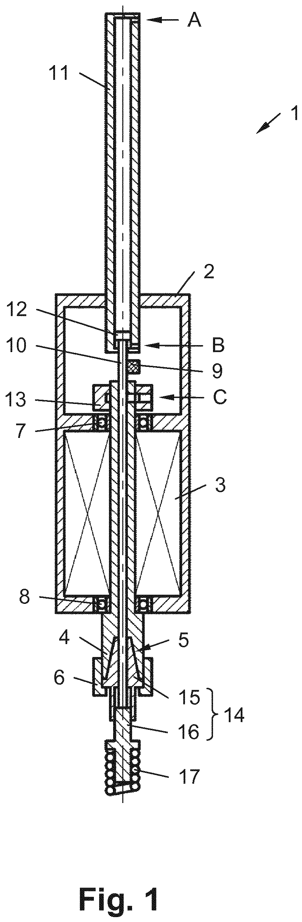

Fig. 1 einen Schnitt durch eine erfindungsgemäße Bearbeitungsmaschine.

Fig. 1 zeigt einen Schnitt durch eine vereinfacht dargestellte Bearbeitungsmaschine 1, welche ein Gehäuse 2 umfasst, eine im Gehäuse 2 drehbar gelagerte und durch einen Motor 3 antreibbare Spindel 4 mit einer Hohlbohrung und eine in oder an der Spindel 4 angeordnete Werkzeugaufnahme 5, welche in diesem Beispiel durch einen Innenkegel gebildet ist. Mit Hilfe der Überwurfmutter 6 kann ein Werkzeug in der Werkzeugaufnahme 5 befestigt werden, beispielsweise ein Bohrer oder ein Fräser.

Das dargestellte System zum Spannen von Werkzeugen ist stark vereinfacht und dient lediglich der Illustration. Die Bearbeitungsmaschine 1 ist daher nicht auf dieses beispielhafte System beschränkt, sondern bezieht sich auch auf andere, grundsätzlich bekannte Systeme zum Spannen von Werkzeugen, insbesondere auf Spannsysteme in Verbindung mit Werkzeugmagazinen, die einen automatischen Werkzeugwechsel ermöglichen.

Die Lagerung der Spindel 4 wird hier beispielhaft durch zwei Lager 7 und 8 verwirklicht.

Die Bearbeitungsmaschine 1 umfasst weiterhin eine in der Hohlbohrung der Spindel 4 bewegbare und mit einem Längenmeßsystem 9 verbundene Stange 10. In diesem Beispiel ist die Stange 10 als Kolbenstange eines Pneumatikzylinders 11 ausgebildet und mit Hilfe von Druckluft bewegbar. Der Pneumatikzylinder 11 umfasst zu diesem Zweck die beiden Druckluftanschlüsse A und B. Am Ende der Kolbenstange 10 befindet sich der Kolben 12. Die Stange 10 dreht sich in diesem Beispiel bei Drehung der Spindel 4 nicht mit. Es könnte aber auch vorgesehen sein, dass sich die Stange 10 synchron mit der Spindel 4 mit dreht.

Darüber hinaus umfasst die Bearbeitungsmaschine 1 einen an die Spindel 4 angekoppelten Kühlmittelflansch 13, mit dessen Hilfe Kühlmittel in die Hohlbohrung der Spindel 4 eingebracht werden kann. Zu diesem Zweck ist der Kühlmittelanschluss C vorgesehen.

In dem dargestellten Beispiel ist kein spanendes Werkzeug in der Werkzeugaufhahme aufgenommen, sondern ein Einschraubwerkzeug 14, das ein Basisteil 15 aufweist, welches in der Werkzeugaufnahme 5 sitzt, und eine im Basisteil 15 längsverschiebliche, jedoch mit dieser drehgekoppelte Aufnahme 16 für einen Gewindeeinsatz 17. Alternativ könnte das Einschraubwerkzeug 14 auch für das Ein- oder Ausdrehen von Schrauben ausgebildet sein.

Die Kopplung zwischen dem Basisteil 15 und der Aufnahme 16 kann beispielsweise durch eine Nut-Feder-Kombination oder auch eine Keilwellenverbindung realisiert sein. Die Kopplung kann auch über einen Vierkant oder einen Sechskant erfolgen. Die erwähnten Verbindungen gewährleisten eine Drehmomentübertragung, ermöglichen dabei gleichzeitig aber eine Längsverschiebung der Aufnahme 16.

Die Aufnahme 16 kann auch federbelastet sein, sodass sie im Initialzustand eine definierte Position zum Basisteil 15 einnimmt. Insbesondere ist es von Vorteil, wenn sich die Aufnahme 16 in der Initialposition im eingefahren Zustand befindet, sodass ein Längsausgleich zwischen Spindel 4 und Aufnahme 16 erfolgen kann, wenn der Einschraubvorgang beginnt.

Die Funktion der in Fig. 1 dargestellten Bearbeitungsmaschine 1 ist nun wie folgt:
Es wird angenommen, dass sich im Wirkungsbereich der Bearbeitungsmaschine 1 sich ein nicht dargestelltes Werkstück befindet. Zum Antasten auf das Werkstück kann die Kolbenstange 10 bis über die Werkzeugaufnahme 5 hinaus bewegt werden, wenn die Werkzeugaufnahme 5 leer ist. Der dabei von der Kolbenstange 10 zurückgelegte Weg wird über das Längenmeßsystem 9 gemessen. Auf diese Weise kann der Abstand der Spindel 4 zum Werkstück ermittelt werden. Ein gesonderter, in der Werkzeugaufnahme 5 gespannter Messtaster ist hierzu nicht erforderlich.

Beispielsweise kann die Längenmessung wie bei einem Messschieber erfolgen, wobei etwa optische, induktive oder kapazitive Abtastung zur Anwendung kommen kann. Grundsätzlich sind aber auch andere Messverfahren möglich.

Zur Bearbeitung des Werkstücks können in an sich bekannter Weise beispielsweise Bohrer, Fräser und dergleichen in der Werkzeugaufnahme 5 gespannt sein. In diesem Fall kann die Kolbenstange 10 hinter eine mit der Hohlbohrung der Spindel 4 verbundene Kühlmittelbohrung bewegt werden. Die besage Kühlmittelbohrung in der Spindel 4 befindet sich im Bereich des Kühlmittelflansches 13. In Folge kann Kühlmittel über den Kühlmittelanschluss C eingebracht werden, das eine ringförmige Nut im Kühlmittelflansch 13 flutet und über die Kühlmittelbohrung in die Hohlbohrung fließen kann, auch wenn sich die Spindel 4 dreht. Das Kühlmittel kann in an sich bekannter Weise durch die Hohlbohrung eines in der Werkzeugaufnahme 5 gespannten Werkzeugs bis zur Bearbeitungsstelle vordringen. Im hinteren Bereich wird die Hohlbohrung in der Spindel 4 durch die Kolbenstange 10 abgedichtet.

Auch wenn kein Kühlmittel verwendet wird, kann es von Vorteil sein, wenn die Kolbenstange 10 während der Bearbeitung des Werkstückst in ihre hintere Position verfahren wird. Die Kolbenstange 10 könnte ansonsten aufgrund ihrer Länge und der vergleichsweise hohen Drehzahlen in der Spindel 4 schlagen beziehungsweise taumeln.

Es wird nun ferner angenommen, dass in an sich bekannter Weise eine Gewindebohrung oder mehrere Gewindebohrungen im Werkstück angefertigt werden. Die dabei entstandenen Späne können beispielsweise mit Hilfe von Druckluft, welche in die Hohlbohrung der Spindel 4 eingebracht wird ausgeblasen werden. Beispielsweise kann die Druckluft über den Anschluss C zugeführt werden oder auch über einen anderen nicht dargestellten Anschluss.

In einem weiteren Schritt wird das in Fig. 1 dargestellte Einschraubwerkzeug 14 in die Werkzeugaufnahme 5 gespannt. Danach wird die Kolbenstange 10 auf die Aufnahme 16 aufgesetzt. Ein auf der Aufnahme 16 befestigter Gewindeeinsatz 17 wird in den Bereich der Gewindebohrung im Werkstück bewegt, und die Spindel 4 wird in Drehung versetzt. Mit Hilfe von Druckluft, welche über den Druckluftanschluss A zugeführt wird, wird der Gewindeeinsatz 17 auf das Werkstück aufgesetzt und angedrückt. Sobald die Gewindegänge der Gewindebohrung und des Gewindeeinsatzes 17 ineinander greifen, bewegt sich die Aufnahme 16 und damit die Kolbenstange 10 in Richtung der Gewindebohrung, auch wenn die Spindel 4 nicht längsverschoben wird. Die Längsverschiebung der Kolbenstange 10 wird dabei mit dem Längenmeßsystem 9 gemessen. Auf diese Weise kann festgestellt werden, ob und wie tief der Gewindeeinsatz 17 in die Gewindebohrung eingedreht wird. Die Spindel 4 kann während des gesamten Eindrehvorgangs lediglich gedreht und nicht längsverschoben werden, oder sie wird entsprechend der gemessenen Verschiebung der Kolbenstange 10 nachgeführt, sodass zwischen dem Basisteil 15 und der Aufnahme 16 nur ein geringer Längenausgleich erforderlich ist.

An dieser Stelle wird angemerkt, dass die Kolbenstange 10 entgegen der Ausführung in der Fig. 1 auch geteilt sein kann. Darüber hinaus kann auch ein Teil der Aufnahme 16 in die Hohlbohrung der Spindel 4 hineinragen, sodass auch kürzere Kolbenstangen 10 zum Einsatz kommen können.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Weiterhin wird angemerkt, dass die Verfahrensschritte nicht notwendigerweise in der vorgestellten Kombination ausgeführt werden, sondern auch einzeln zur Anwendung kommen können. Z.B. kann die Bearbeitungsmaschine 1 so eingesetzt werden, dass die Kolbenstange 10 nur bei leerer Werkzeugaufnahme 5 eingesetzt wird oder nur im Zusammenhang mit einem Einschraubwerkzeug 14. Die Verfahrensschritte können generell auch in anderer Abfolge ausgeführt werden. Beispielsweise kann die Spindel 4 in Rotation versetzt werden bevor die Kolbenstange 10 auf die Aufnahme 16 aufgesetzt wird oder danach, und so weiter.

Anstelle des Pneumatikzylinders 11 können auch andere Linearmotoren eingesetzt werden, beispielsweise kann die Stange 10 die Kolbenstange eines Hydraulikzylinders sein, der Anker eines Elektromagneten oder auch die Spindel eines Spindelantriebs. Aufgrund der Starrheit des Antriebs kann die Spitze der Stange 10 insbesondere bei Verwendung eines Hydraulikzylinders oder eines Spindelantriebs gefedert sein. Bei Verwendung eines Pneumatikzylinders 11 kann eine gesonderte Feder entfallen, da die Luft als solche diese Funktion übernehmen kann.

Insbesondere wird auch festgehalten, dass die dargestellte Vorrichtung in der Realität auch mehr oder auch weniger Bestandteile als dargestellt umfassen kann. Die dargestellte Vorrichtung beziehungsweise deren Bestandteile können auch unmaßstäblich und/oder vergrößert und/oder verkleinert dargestellt sein.

### Bezugszeichenaufstellung

- 1: Bearbeitungsmaschine
- 2: Gehäuse
- 3: Motor
- 4: Spindel
- 5: Werkzeugaufnahme
- 6: Überwurfmutter
- 7: Lager
- 8: Lager
- 9: Längenmeßsystem
- 10: Meßstange/Kolbenstange
- 11: Pneumatikzylinder
- 12: Kolben
- 13: Kühlmittelflansch
- 14: Einschraubwerkzeug
- 15: Basisteil
- 16: Aufnahme für Schrauben/Gewindeeinsätze
- 17: Gewindeeinsatz

- A: Druckluftanschluss
- B: Druckluftanschluss
- C: Kühlmittelanschluss

## Patentansprüche

1. Bearbeitungsmaschine (1), umfassend
- ein Gehäuse (2),
- eine im Gehäuse (2) drehbar gelagerte und durch einen Motor (3) antreibbare, Spindel (4) mit einer Hohlbohrung,
- eine in oder an der Spindel (4) angeordnete Werkzeugaufnahme (5) und
- eine in der Hohlbohrung der Spindel (4) bewegbare und mit einem Längenmeßsystem (9) verbundene Stange (10),
- ein in der Werkzeugaufnahme (5) angeordnetes Einschraubwerkzeug (14), umfassend ein Basisteil (15), welches in der Werkzeugaufnahme (5) gespannt ist, und eine im Basisteil (15) längsverschiebliche, jedoch mit dieser drehgekoppelten Aufnahme (16) für eine Schraube und/oder einen Gewindeeinsatz (17) aufweist, **dadurch gekennzeichnet, dass** die Stange (10) bis zu der genannten Aufnahme (16) bewegbar ist.

2. Bearbeitungsmaschine (1) nach Anspruch 1, **dadurch gekennzeichnet, dass** die Stange (10) durch einen Linearantrieb bewegbar ist oder Teil eines Linearantriebs ist.

3. Bearbeitungsmaschine (1) nach Anspruch 2, **dadurch gekennzeichnet, dass** die Stange (10) als Kolbenstange eines Pneumatikzylinders (11) ausgebildet ist und mit Hilfe von Druckluft bewegbar ist.

4. Bearbeitungsmaschine (1) nach einem der Ansprüche 1 bis 3, **gekennzeichnet durch** einen an die Spindel (4) angekoppelten Kühlmittelflansch (13), mit dessen Hilfe Kühlmittel in die Hohlbohrung der Spindel einbringbar ist.

5. Bearbeitungsmaschine (1) nach Anspruch 4, **dadurch gekennzeichnet, dass** die Spindel (4) eine mit der Hohlbohrung verbundene und im Bereich des Kühlmittelflansches (13) angeordnete Kühlmittelbohrung aufweist und die Stange (10) hinter diese Kühlmittelbohrung bewegbar ist.

6. Verfahren zum Betrieb einer Bearbeitungsmaschine (1), welche ein Gehäuse (2) umfasst, eine im Gehäuse (2) drehbar gelagerte und durch einen Motor (3) antreibbare, Spindel (4) mit einer Hohlbohrung und eine in oder an der Spindel (4) angeordnete Werkzeugaufnahme (5),
wobei ein Basisteil (15) eines Einschraubwerkzeugs (14), das eine im Basisteil (15) längsverschieblich gelagerte, jedoch mit dieser drehgekoppelten Aufnahme (16) für eine Schraube und/oder einen Gewindeeinsatz (17) aufweist, in der Werkzeugaufnahme (5) gespannt wird und
**dadurch gekennzeichnet, dass** eine mit einem Längenmeßsystem (9) verbundene Stange (10) in der Hohlbohrung bis zu der genannten Aufnahme (16) bewegt wird.

7. Verfahren nach Anspruch 6, **dadurch gekennzeichnet, dass** mit der Stange (10) eine Kraft / ein Druck auf die Aufnahme (16) für die Schraube und/oder den Gewindeeinsatz (17) ausgeübt wird.

## Claims

1. A processing machine (1) comprising
- a housing (2),
- a spindle (4) having a hollow bore, which spindle (4) is rotatably mounted in the housing (2) and can be driven by a motor (3),
- a tool holder (5) arranged in or on the spindle (4) and
- a rod (10) which is movable within the hollow bore of the spindle (4) and connected to a length measuring system (9),
**characterized by**
- a screw-in tool (14) arranged in the tool holder (5), the screw-in tool (14) comprising a base part (15), which is clamped in the tool holder (5), and has a receptacle (16), which can be longitudinally displaced in the base part (15) but is rotationally coupled therewith, for a screw and/or a thread insert (17),
**characterized in that**
the rod (10) is movable up to said receptacle (16).

2. The processing machine (1) according to claim 1, **characterized in that** the rod (10) can be moved by means of a linear drive or is part of a linear drive.

3. The processing machine (1) according to claim 2, **characterized in that** the rod (10) is configured as a piston rod of a pneumatic cylinder (11) and can be moved with the aid of compressed air.

4. The processing machine (1) according to one of claims 1 to 3, **characterized by** a coolant flange (13) coupled to the spindle (4), by means of which coolant flange (13) coolant can be introduced into the hollow bore of the spindle.

5. The processing machine (1) according to claim 4, **characterized in that** the spindle (4) has a coolant bore connected to the hollow bore and arranged in the region of the coolant flange (13) and **in that** the rod (10) can be moved behind said coolant bore.

6. A method for operating a processing machine (1) which comprises a housing (2), a spindle (4) having a hollow bore, which spindle (4) is rotatably mounted in the housing (2) and can be driven by a motor (3), and a tool holder (5) arranged in or on the spindle (4),
wherein
a base part (15) of a screw-in tool (14), which has a receptacle (16), which can be longitudinally displaced in the base part (15) but is rotationally coupled therewith (16), for a screw and/or a thread insert (17), is clamped in the tool holder (5), and **characterized in that**
a rod (10) connected with a length measuring system (9) is moved up to said receptacle (16) in the hollow bore.

7. The method according to claim 6, **characterized in that** with the aid of the rod (10), a force/a pressure is applied to the receptacle (16) for the screw and/or the thread insert (17).

## Revendications

1. Machine d'usinage (1) comprenant
- un boîtier (2),
- une broche (4) avec un alésage creux, logée de manière rotative dans le boîtier (2) et pouvant être entraînée par un moteur (3),
- un logement d'outil (5) disposé dans ou sur la broche (4) et
- une tige (10) mobile dans l'alésage creux de la broche (4) et reliée avec un système de mesure de longueur (9),
- un outil de vissage (14) disposé dans le logement d'outil (5), comprenant une partie de base (15), qui est serrée dans le logement d'outil (5), et qui comprend un logement (16), coulissant longitudinalement dans la partie de base (15), mais couplé en rotation avec celle-ci, pour une vis et/ou un insert fileté (17), **caractérisée en ce que** la tige (10) est mobile jusqu'au logement (16) mentionné.

2. Machine d'usinage (1) selon la revendication 1, **caractérisée en ce que** la tige (10) peut être déplacée par un entraînement linéaire ou fait partie d'un entraînement linéaire.

3. Machine d'usinage (1) selon la revendication 2, **caractérisée en ce que** la tige (10) est conçue comme une tige de piston d'un vérin pneumatique (11) et peut être déplacée à l'aide d'air comprimé.

4. Machine d'usinage (1) selon l'une des revendications 1 à 3, **caractérisée par** une bride de produit de refroidissement (13), couplée à la broche (4), à l'aide de laquelle un produit de refroidissement peut être introduit dans l'alésage creux de la broche.

5. Machine d'usinage (1) selon la revendication 4, **caractérisée en ce que** la broche (4) comprend un alésage de produit de refroidissement relié avec l'alésage creux et disposé au niveau de la bride de produit de refroidissement (13) et la tige (10) peut être déplacée derrière cet alésage de produit de refroidissement.

6. Procédé de fonctionnement d'une machine d'usinage (1), qui comprend un boîtier (2), une broche (4) avec un alésage creux, logée de manière rotative dans le boîtier (2) et pouvant être entraînée par un moteur (3), et un logement d'outil (5) disposé dans ou sur la broche (4), dans lequel une partie de base (15) d'un outil de vissage (14), qui comprend un logement (16), coulissant longitudinalement dans la partie de base (15), mais couplé en rotation avec celle-ci, pour une vis et/ou un insert fileté (17), est serrée dans le logement d'outil (5) et **caractérisé en ce qu'**une tige (10) reliée avec un système de mesure de longueur (9) est déplacée dans l'alésage creux jusqu'au logement (16) mentionné.

7. Procédé selon la revendication 6, **caractérisé en ce que**, avec la tige (10), une force / pression est exercée sur le logement (16) pour la vis et/ou l'insert fileté (17).
